# EUROPÄISCHE PATENTSCHRIFT

(11) **EP 2 084 089 B1**
(45) Veröffentlichungstag und Bekanntmachung des Hinweises auf die Patenterteilung: **08.06.2011**
(21) Anmeldenummer: 07821235.4
(22) Anmeldetag: 12.10.2007
(51) Int. Cl.: B65G 1/137

(54) **KOMMISSIONIEREINRICHTUNG FÜR STÜCKGÜTER**
APPARATUS FOR THE ORDER-PICKING OF ARTICLES
DISPOSITIF DE PRÉPARATION DE COMMANDES POUR COLIS

(30) Priorität: 12.10.2006 DE 102006048751
(43) Veröffentlichungstag der Anmeldung: 05.08.2009
(73) Patentinhaber: SIEMENS AKTIENGESELLSCHAFT, 80333 München (DE)
(72) Erfinder: TANZ, Torsten, 78247 Hilzingen (DE)
(86) Internationale Anmeldenummer: PCT/EP2007/060868
(87) Internationale Veröffentlichungsnummer: WO 2008/043828

(56) Entgegenhaltungen:
- DE-C1- 3 920 405
- DE-C2- 4 090 308

## Beschreibung

Die Erfindung betrifft eine Kommissioniereinrichtung für Stückgüter, z.B. uniforme Behälter, nach dem Oberbegriff des Anspruches 1.

Eine Einrichtung zum Kommissionieren (Sortieren, Speichern und Zusammenführen) ist dazu bestimmt, eine Anzahl dieser Stückgüter mit einem gemeinsamen temporären Ziel einer bestimmtem Ladeeinheit, die durch die Kapazität der nachfolgend damit zu beladenen Ladeeinheit definiert wird, zu akkumulieren und zur Beladung der Ladeeinheit dieser zuzuführen.

Bekannt ist eine Vielzahl verschiedener Lösungen zum Kommissionieren von Stückgütern mit Kopierern. Diese sind dadurch gekennzeichnet, dass jeder Ausgang des Sortierers mit einem Endspeicher verbunden ist, der eine oder mehrere im Sortierplan festgelegte Sortierrichtung repräsentiert. Eine häufige Ausführungsform der Endspeicher ist entweder eine Rutsche oder eine Schwerkraft-Rollenbahn. Werden sehr viele verschiedene Sortierrichtungen benötigt, so ist entweder eine äquivalente Anzahl von Endstellen vorzusehen oder ein zweiter Sortiergang wird bei einer Mehrfachbelegung der Endstellen erforderlich. Die Beladung der Ladeeinheiten, z.B. Behälterwagen, erfolgt in einem physikalisch und zeitlich separaten, hauptsächlich manuellen Vorgang. Ist der Beladevorgang automatisiert, wird er bisher vom Ausgang eines separaten automatischen Lagers mit wahlfreiem Zugriff auf einzelne Stückgüter gespeist.

Der Erfindung liegt die Aufgabe zugrunde, eine aufwandsarme Kommissioniereinrichtung für Stückgüter mit geringem Grundflächenbedarf zu schaffen.

Erfindungsgemäß wird die Aufgabe durch die Merkmale des Anspruches 1 gelöst.
Die spezielle Kombination von Kreissortiermaschine, Durchlaufregal/e und Transportvorrichtungen zum Be- und Entladen des oder der Durchlaufregale und der Kreissortiermaschine hat als Ergebnis eine leistungsstarke automatische Kommissioniereinrichtung mit relativ kompakter Bauform.

Vorteilhafte Ausgestaltungen der Erfindung sind in den Unteransprüchen dargelegt.
So ist es zur Realisierung der Transportvorrichtung zum Ausschleusen der in der Kreissortiermaschine befindlichen Stückgüter in das oder die Durchlaufregale vorteilhaft, für maximal jedes Regalfach des oder der Durchlaufregale einen Sortierausgang der Kreissortiermaschine vorzusehen, wobei die Sortierausgänge so gestaltet sind, dass die Stückgüter aus dem jeweiligen Sortierausgang in das entsprechende Regalfach transportiert werden.

Eine weitere vorteilhafte Ausgestaltung zur Realisierung der Transportvorrichtung zum Ausschleusen der in der Kreissortiermaschine befindlichen Stückgüter in das oder die Durchlaufregale besteht darin, an der Eingangsseite des oder der Durchlaufregale mindestens ein die Stückgüter entlang der Regalfächer entsprechend ihrer Sortierkriterien zu den diesen Sortierkriterien zugeordneten Regalfächern gesteuert verfahrender Transportwagen mit einem Mechanismus zum automatischen Füllen der gemäß der ermittelten Sortierkriterien vorgesehenen Regalfächer mit freier Kapazität anzuordnen und mindestens einen Sortierausgang der Kreissortiermaschine jeweils mit einer Vorrichtung zum Beladen des oder der Transportwagen zum Füllen der Regalfächer zu verbinden.

Für eine Ausführung mit möglichst geringer Grundfläche ist es vorteilhaft, wenn sich das Durchlaufregal mit den Transportvorrichtungen zum Beladen und Abtransport der Stückgüter innerhalb des Transportumlaufs der Kreissortiermaschine befindet.

Vorteilhafte Ausführungen für eine Kreissortiermaschine sind bewährte Querband- oder Kippschalensortiermaschinen.

Um eine kostengünstige Ausführung der Transportvorrichtung an der Ausgangsseite des Durchlaufregals zu erhalten, ist es vorteilhaft, eine entlang der Regalfächer verlaufende angetriebene Transportbahn vorzusehen, die die Stückgüter aus den Regalfächern aufnimmt und an einen der Sortiereingänge der Kreissortiermaschine abgibt.

Eine andere vorteilhafte Ausführung der Transportvorrichtung an der Ausgangsseite des Durchlaufregals besteht darin, mindestens einen entlang der Regalfächer verfahrbaren Transportwagen vorzusehen, der die Stückgüter aus den Regalfächern aufnimmt und an einen der Sortiereingänge der Kreissortiermaschine abgibt.

Zur Erzielung einer hohen Speicherkapazität der Durchlaufregale ist es vorteilhaft, wenn diese mehrere übereinander angeordnete Regalfachebenen besitzen, wobei für jede Ebene separate Transportvorrichtungen zum Beladen und Abtransport der Stückgüter vorgesehen sind.

Bei mehreren Regalfachebenen ist es weiterhin vorteilhaft, die Transportwagen mit Hubvorrichtungen zum Be- oder Entladen des oder der Durchlaufregale in den verschiedenen Ebenen auszurüsten.

Anschließend wird die Erfindung in einem Ausführungsbeispiel anhand der Zeichnung erläutert.

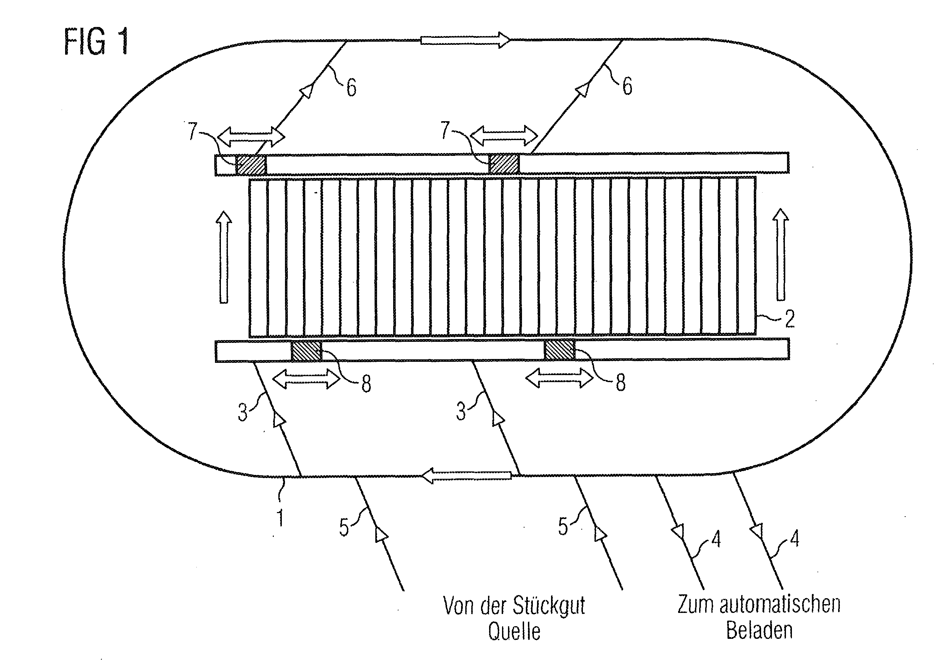

Dabei zeigt
- FIG 1: eine schematische Draufsicht einer erfin- dungsgemäßen Einrichtung mit einem Durchlauf- regal innerhalb des Transportumlaufes einer Kreissortiermaschine mit Transportwagen zum Be-und Entladen des Durchlaufregals

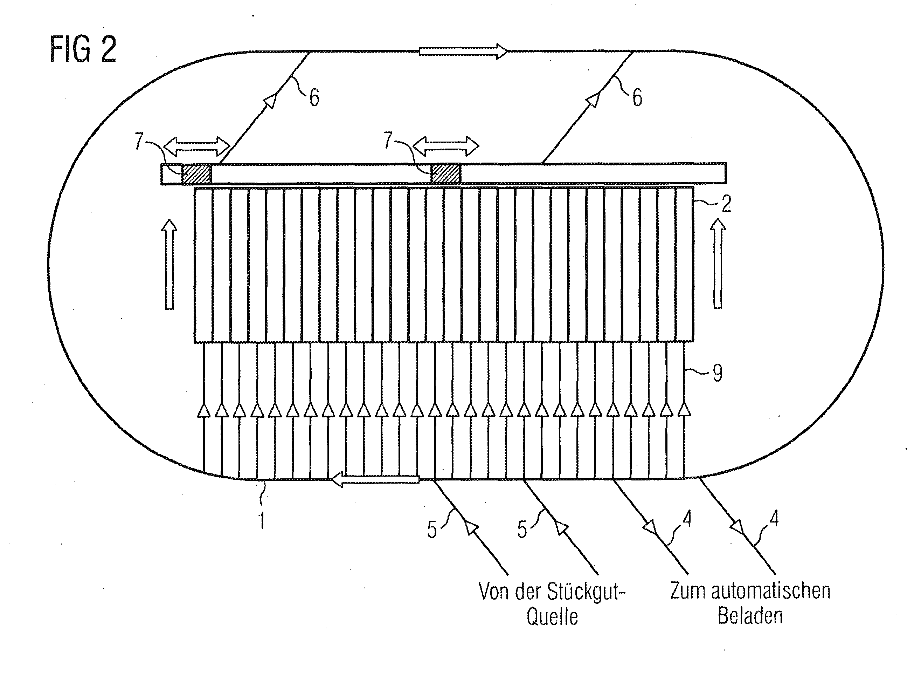

- FIG 2: eine schematische Draufsicht einer erfin- dungsgemäßen Einrichtung mit einem Durchlauf- regal innerhalb des Transportumlaufs einer Kreissortiermaschine mit Transportwagen zum Entladen des Durchlaufregals und den Regalfä- chern zugeordneten Sortierausgängen mit Transportvorrichtungen zum Beladen

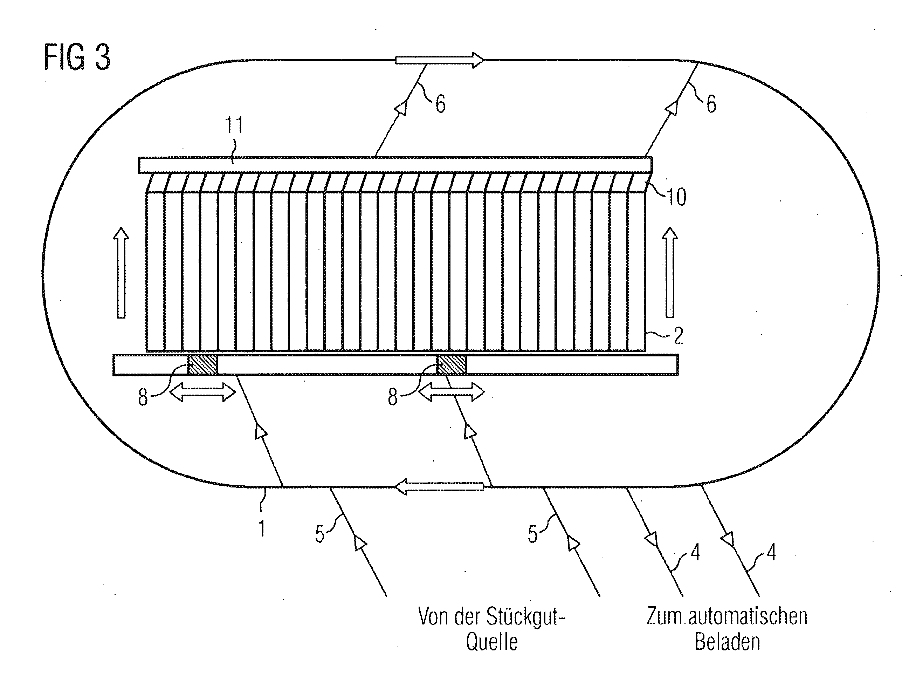

- FIG 3: eine schematische Draufsicht einer erfin- dungsgemäßen Einrichtung mit einem Durchlauf- regal innerhalb des Transportumlaufs einer Kreissortiermaschine mit Transportwagen zum Beladen des Durchlaufregals und an jedem Re- galfachausgang befindlichen Transportvorrich- tungen und einer steuerbar angetriebenen Transportbahn zum Entladen

In den schematischen Darstellungen der Figuren ist von der an sich bekannten Kreissortiermaschine 1 nur der Transportumlauf dargestellt. Die Realisierung kann mittels Kippschalensortern, Querbandsortern oder auch mittels Linearsortern, deren Transportbahnenden durch Transportmittel einen Umlauf bildend verbunden sind, erfolgen. Innerhalb des Transportumlaufs der Kreissortiermaschine 1 ist gemäß FIG 1 ein einstöckiges Durchlaufregal 2 angeordnet, wobei jeder Regalfachausgang gesteuert freigebbar ist. An der einen Geraden des Transportumlaufs besitzt die Kreissortiermaschine 1 zwei Sortierausgänge 3 mit Fördervorrichtungen, die an eine längs des Durchlaufregals 2 vor den Facheingängen verlaufende Transportbahn von zwei Transportwagen 8 geführt ist, zwei weitere Sortierausgänge 4 mit Fördervorrichtungen für die fertig kommissionierten Stückgüter und zwei Sortiereingänge 5, in welche die zu kommissionierenden Stückgüter von einer Stückgutquelle kommend eingespeist werden. Vor diesen Sortiereingängen 5 erfolgt ein nicht dargestelltes Ermitteln der Kommissionier-bzw. Sortierkriterien, z.B. Zieladressen, Stückgutarten, jedes Stückgutes mittels entsprechender Sensorik (Bilderfassung und -auswertung, OCR-Adressleser, Barcode Leser). Um die Stückgüter aus der Kreissortiermaschine 1 in freie Regalfächer des Durchlaufregals 2 zu befördern, fahren die Transportwagen 8 an die entsprechenden Sortierausgänge 3 mit Stückgütern und übernehmen diese. Anschließend fahren sie an das jeweils vorgesehene Regalfach und schieben die Stückgüter in das Regalfach. Dies kann mittels eines Schiebemechanismus oder eines gesteuert angetriebenen Transportbandes des Wagens erfolgen. Die Zuordnung der Regalfächer entsprechend der Sortier-/Kommissionierkriterien kann in bekannter weise entweder fest oder dynamisch erfolgen. Bei der festen Zuordnung ist jedes Fach einem bestimmten Sortier-/Kommissionierkriterium, z.B. einer bestimmten Zieladresse oder einem bestimmten Empfänger zugeordnet, bei der dynamischen Zuordnung wird das Sortier-/Kommissionierkriterium des nächsten im Durchlaufregal 2 zu speichernden Stückgutes einem freien Regalfach zugeordnet und diese Zuordnung in einer Datei abgespeichert, falls ein Regalfach mit entsprechendem freien Speicherplatz und gleichem Sortier-/Kommissionierkriterium momentan nicht vorhanden ist. An der Ausgangsseite des Durchlaufregals 2 befindet sich eine längs des Durchlaufregals 2 vor den Fachausgängen verlaufende Transportbahn von zwei weiteren Transportwagen 7, die an jene Fachausgänge gefahren werden, an dienen entsprechend des Kommissionierplanes gerade mindestens ein Stückgut entladen werden soll. Die beladenen Transportwagen 7 fahren zwei weitere Sortiereingänge 6 mit Transportvorrichtungen der Kreissortiermaschine 1 an, wo die Stückgüter wie bei den Transportwagen 8 an der Regaleingangsseite mittels Schiebemechanismen oder Transportbändern in die Sortiereingänge 6 geladen werden. In dieser vollautomatischen Kommissioniereinrichtung mit geringem Platzbedarf (Durchlaufregal 2 befindet sich innerhalb des Transportumlaufs der Kreissortiermaschine 1) werden die Stückgüter solange sortiert und zwischengespeichert, bis sie in der geforderten Reihenfolge an den Sortierausgängen 4 fertig kommissioniert bereitstehen. Eine weitere Möglichkeit zum Beladen des Durchlaufregals 2 besteht entsprechend FIG 2 darin, dass jedem Regalfacheingang ein Sortierausgang 9 zugeordnet ist, von dem die Stückgüter über Transportstrecken, wie Rutschen, Rollenbahnen oder Transportbändern, in das Regalfach gelangen.

Bei einer Variante zum Befördern der Stückgüter aus dem Durchlaufregal 2 in die Sortiereingänge 6 ist an jedem Regalfachausgang eine Transportvorrichtung 10 (z.B. eine Rutsche) angebracht, welche die Stückgüter auf eine entlang der Regalfächer verlaufende, gesteuert angetriebene Transportbahn 11 fördert (FIG 3). Die Transportbahn 11 transportiert dann das Stückgut von der jeweiligen Fachposition zum entsprechenden Sortiereingang 6.

Je nach Anforderung können diese Varianten, die Anzahl der Sortierein- und -ausgänge 3,4,5,6 oder Anzahl der Durchlaufregale 2 gewählt werden. Zur Kapazitätserhöhung ist es auch möglich, die Regalfächer in mehreren Ebenen übereinander anzuordnen. Zum Be- und Entladen können für jede Ebene entsprechende Vorrichtungen eingesetzt werden. Kostengünstiger ist es, die Transportwagen mit Hubvorrichtungen auszustatten.

## Patentansprüche

1. Kommissioniereinrichtung für Stückgüter mit mindestens einem Durchlaufregal (2), dessen Regalfächer festgelegten Sortierkriterien zugeordnet sind und an deren Enden sich Haltemechanismen befinden, die gesteuert aus der Halteposition in eine Entladeposition verfahrbar sind, einer Sortiermaschine mit mindestens einem Sortiereingang, dem die zu kommissionierenden Stückgüter zugeführt werden und mindestens einem Sortierausgang für die kommissionierten Stückgüter, und einer Einrichtung zum Ermitteln der Sortierkriterien des jeweiligen Stückgutes, **dadurch gekennzeichnet, dass**
- an der Ausgangsseite des oder der Durchlaufregale (2) eine Transportvorrichtung (7) zum Abtransport der aus den Regalfächern des oder der Durchlaufregale (2) entsprechend der Kommissionierungsregel entladenen Stückgüter und Beschicken mindestens eines Einganges (6) der als Kreissortiermaschine (1) ausgeführten Sortiermaschine, bei welcher die auf Transportunterlagen befindlichen Stückgüter umlaufen und an Sortierausgängen (3,4) entsprechend der Sortierkriterien von den Transportunterlagen ausgeschleust werden,
- und eine Transportvorrichtung (8) zum Ausschleusen der in der Kreissortiermaschine (1) befindlichen Stückgüter in beliebige Regalfacheingänge vorgesehen ist.

2. Kommissioniereinrichtung nach Anspruch 1, **dadurch gekennzeichnet , dass** für maximal jedes Regalfach des oder der Durchlaufregale (2) ein Sortierausgang (9) der Kreissortiermaschine (1) vorgesehen ist, wobei die Sortierausgänge (9) so gestaltet sind, dass die Stückgüter aus dem Sortierausgang (9) in das entsprechende Regalfach transportiert werden.

3. Kommissioniereinrichtung nach Anspruch 1, **dadurch gekennzeichnet, dass** an der Eingangsseite des oder der Durchlaufregale (2) mindestens ein die Stückgüter entlang der Regalfächer entsprechend ihrer Sortierkriterien zu den diesen Sortierkriterien zugeordneten Regalfächern gesteuert verfahrender Transportwagen (8) mit einem Mechanismus zum automatischen Füllen der gemäß der ermittelten Sortierkriterien vorgesehenen Regalfächer mit freier Kapazität angeordnet ist und mindestens ein Sortierausgang (3) der Kreissortiermaschine (1) jeweils mit einer Vorrichtung zum Beladen des oder der Transportwagen zum Füllen der Regalfächer verbunden ist.

4. Kommissioniereinrichtung nach Anspruch 1, **dadurch gekennzeichnet, dass** sich das oder die Durchlaufregale (2) mit den Transportvorrichtungen zum Beladen und Abtransport der Stückgüter innerhalb des Transportumlaufs der Kreissortiermaschine (1) befinden.

5. Kommissioniereinrichtung nach Anspruch 1, **dadurch gekennzeichnet, dass** die Kreissortiermaschine (1) als Querbandsortiermaschine ausgeführt ist.

6. Kommissioniereinrichtung nach Anspruch 1, **dadurch gekennzeichnet, dass** die Kreissortiermaschine (1) als Kippschalensortiermaschine ausgeführt ist.

7. Kommissioniereinrichtung nach Anspruch 1, **dadurch gekennzeichnet, dass** als Transportvorrichtung an der Ausgangsseite des oder der Durchlaufregale (2) eine entlang der Regalfächer verlaufende, gesteuert angetriebene Transportbahn (11) vorgesehen ist, die die Stückgüter aus den Regalfächern aufnimmt und an jeweils einen der Sortiereingänge (6) der Kreissortiermaschine (1) abgibt.

8. Kommissioniereinrichtung nach Anspruch 1, **dadurch gekennzeichnet, dass** als Transportvorrichtung an der Ausgangsseite des oder der Durchlaufregale (2) mindestens ein entlang der Regalfächer verfahrbarer Transportwagen (7) vorgesehen ist, der die Stückgüter aus den Regalfächern aufnimmt und an jeweils einen der Sortiereingänge der Kreissortiermaschine (1) abgibt.

9. Kommissioniereinrichtung nach Anspruch 1, **dadurch gekennzeichnet, dass** die Durchlaufregale (2) mehrere Regalfachebenen übereinander besitzen, wobei für jede Ebene separate Transportvorrichtungen zum Beladen und Abtransport der Stückgüter vorgesehen sind.

10. Kommissioniereinrichtung nach Anspruch 3 oder 8, **dadurch gekennzeichnet, dass** die Durchlaufregale (2) mehrere Regalfachebenen besitzen und die Transportwagen (7,8) mit Hubvorrichtungen zum Be- oder Entladen des oder der Durchlaufregale (2) in den verschiedenen Ebenen ausgerüstet sind.

## Claims

1. Apparatus for order-picking articles, having at least one dynamic storage rack (2), of which the compartments are associated with defined sorting criteria and have retaining mechanisms located at their ends, it being possible for these retaining mechanisms to be displaced in a controlled manner from the retaining position into an unloading position, having a sorting machine with at least one sorting entrance, to which are fed the articles which are to be order-picked, and with at least one sorting exit for the articles which are to be order-picked, and having a device for determining the sorting criteria of the respective articles, **characterized in that**
- on the exit side of the dynamic storage rack or racks (2) is provided a transporting arrangement (7) for transporting away the articles unloaded from the compartments of the dynamic storage rack or racks (2) in accordance with the order-picking requirements, and for charging at least one entrance (6) to the sorting machine, which is configured as a circular sorting machine (1) and in which the articles circulate on transportation supports and are discharged from the transportation supports at sorting exits (3, 4), in accordance with the sorting criteria,
- and also provided is a transporting arrangement (8), by means of which articles located in the circular sorting machine (1) are discharged into any desired compartment entrances.

2. Order-picking apparatus according to Claim 1, **characterized in that** a sorting exit (9) of the circular sorting machine (1) is provided for, at most, each compartment of the dynamic storage rack or racks (2), wherein the sorting exits (9) are configured such that the articles are transported out of the sorting exit (9) into the corresponding compartment.

3. Order-picking apparatus according to Claim 1, **characterized in that** arranged on the entrance side of the dynamic storage rack or racks (2) is at least one transporting carriage (8) which displaces the articles in a controlled manner along the compartments, in accordance with the sorting criteria thereof, to the compartments associated with these sorting criteria, and has a mechanism for automatically filling the compartments with free capacity which are provided in accordance with the determined sorting criteria, and at least one sorting exit (3) of the circular sorting machine (1) is connected in each case to an arrangement for loading the transporting carriage or carriages for filling the compartments.

4. Order-picking apparatus according to Claim 1, **characterized in that** the dynamic storage rack or racks (2), with the transporting arrangements for loading the articles and transporting them away, are located within the transporting circuit of the circular sorting machine (1).

5. Order-picking apparatus according to Claim 1, **characterized in that** the circular sorting machine (1) is designed as a cross-belt sorting machine.

6. Order-picking apparatus according to Claim 1, **characterized in that** the circular sorting machine (1) is designed as a tilt-tray sorting machine.

7. Order-picking apparatus according to Claim 1, **characterized in that** the transporting arrangement provided on the exit side of the dynamic storage rack or racks (2) is a transporting path (11) which runs along the compartments, is driven in a controlled manner, receives the articles from the compartments and passes them on to in each case one of the sorting entrances (6) of the circular sorting machine (1).

8. Order-picking apparatus according to Claim 1, **characterized in that** the transporting arrangement provided on the exit side of the dynamic storage rack or racks (2) has at least one transporting carriage (7) which can be displaced along the compartments, receives the articles from the compartments and passes them on to in each case one of the sorting entrances of the circular sorting machine (1).

9. Order-picking apparatus according to Claim 1, **characterized in that** the dynamic storage racks (2) have a number of compartment levels one above the other, wherein separate transporting arrangements for loading the articles and transporting them away are provided for each level.

10. Order-picking apparatus according to Claim 3 or 8, **characterized in that** the dynamic storage racks (2) have a number of compartment levels, and the transporting carriages (7, 8) are equipped with lifting arrangements for loading or unloading the dynamic storage rack or racks (2) on the various levels.

## Revendications

1. Dispositif de préparation de commandes pour colis, comprenant au moins un rayonnage ( 2 ) à traverser, dont les casiers sont associés à des critères de tri fixés et aux extrémités desquels se trouvent des mécanismes de retenue, qui peuvent être déplacés d'une manière commandée d'une position de retenue à une position de déchargement, une machine de tri ayant au moins une entrée de tri à laquelle les colis à préparer sont envoyés, et au moins une sortie de tri, pour les colis préparés, et un dispositif de détermination des critères de tri du colis respectif, **caractérisé en ce que**
- du côté de la sortie du ou des rayonnages (2) à traverser, est prévu un dispositif ( 7 ) de transport pour l'enlèvement des colis déchargés des casiers du ou des rayonnages (2) à traverser conformément aux règles de préparation et pour les envoyer à au moins une entrée ( 6 ) de la machine de tri réalisée en machine (1) de tri circulaire, dans laquelle les colis se trouvant sur des supports de transport tournent et sont évacués des supports de transport à des sorties ( 3, 4) de tri conformément aux critères de tri,
- et il est prévu un dispositif ( 8 ) de transport dans n'importe quelle entrée de casier de rayonnage, pour évacuer les colis se trouvant dans la machine ( 1 ) de tri circulaire.

2. Dispositif de préparation de commandes suivant la revendication 1, **caractérisé en ce que**, pour au maximum chaque casier du rayonnage ou des rayonnages ( 2 ) à traverser, il est prévu une sortie ( 9 ) de la machine ( 1 ) de tri circulaire, les sorties ( 9 ) de tri étant conformées de manière à ce que les colis soient transportés de la sortie (9) de tri au casier de rayonnage correspondant.

3. Dispositif de préparation de commandes suivant la revendication 1, **caractérisé en ce que**, du côté de l'entrée du rayonnage ou des rayonnages (2) à traverser, est disposé au moins un chariot (8) de transport, qui est déplacé de manière commandée le long des casiers du rayonnage en fonction de leur critère de sortie vers les casiers du rayonnage associés à ces critères de sortie et qui a un mécanisme de remplissage automatique des casiers de rayonnage prévus suivant les critères de tri déterminés et ayant des capacités libres, et au moins une sortie ( 3 ) de tri de la machine ( 1 ) de tri circulaire est reliée respectivement à un dispositif de chargement du ou des chariots de transport pour remplir les casiers de rayonnage.

4. Dispositif de préparation de commandes suivant la revendication 1, **caractérisé en ce que** le ou les rayonnages ( 2 ) à traverser se trouvent avec les dispositifs de transport pour le chargement et l'enlèvement des colis à l'intérieur de la circulation de transport de la machine ( 1 ) de tri circulaire.

5. Dispositif de préparation de commandes suivant la revendication 1, **caractérisé en ce que** la machine ( 1 ) de tri circulaire est réalisée sous la forme d'une machine de tri à bande transversale.

6. Dispositif de préparation de commandes suivant la revendication 1, **caractérisé en ce que** la machine ( 1 ) de tri circulaire est réalisée sous la forme d'une machine de tri à coquilles basculantes.

7. Dispositif de préparation de commandes suivant la revendication 1, **caractérisé en ce qu'**il est prévu comme dispositif de transport du côté de la sortie du ou des rayonnages ( 2 ) à traverser une voie ( 11 ) de transport, qui s'étend le long des casiers de rayonnage, qui est entraînée de manière commandée, qui reçoit les colis provenant des casiers de rayonnage et qui les cède à respectivement l'une des entrées ( 6 ) de tri de la machine ( 1 ) de tri circulaire.

8. Dispositif de préparation de commandes suivant la revendication 1, **caractérisé en ce qu'**il est prévu comme dispositif de transport du côté de la sortie du ou des rayonnages ( 2 ) à traverser au moins un chariot ( 7 ) de transport, qui peut être déplacé le long des casiers de rayonnage, qui reçoit les colis provenant des casiers de rayonnage et qui les cède à respectivement l'une des entrées de tri de la machine ( 1 ) de tri circulaire.

9. Dispositif de préparation de commandes suivant la revendication 1, **caractérisé en ce que** les rayonnages ( 2 ) à traverser ont plusieurs plans de casier de rayonnage superposés, des dispositifs distincts de transport pour chaque plan étant prévus pour le chargement et l'enlèvement des colis.

10. Dispositif de préparation de commandes suivant la revendication 3 ou 8, **caractérisé en ce que** les rayonnages ( 2 ) à traverser ont plusieurs plans de casier de rayonnage et des chariots ( 7, 8 ) de transport sont équipés dans les divers plans de dispositifs de levage pour charger ou décharger le rayonnage ou les rayonnages ( 2 ) à traverser.
